# EUROPÄISCHE PATENTSCHRIFT

(11) **EP 1 545 029 B1**
(45) Veröffentlichungstag und Bekanntmachung des Hinweises auf die Patenterteilung: **14.03.2007**
(21) Anmeldenummer: 04090496.3
(22) Anmeldetag: 17.12.2004
(51) Int. Cl.: H04B 10/158, H03K 5/08, H04L 25/06

(54) **Optische Empfängerschaltung**
Optical receiving device
Dispositif de réception optique

(30) Priorität: 19.12.2003 US 531345 P; 05.04.2004 US 818878
(43) Veröffentlichungstag der Anmeldung: 22.06.2005
(73) Patentinhaber: Infineon Technologies AG, 81669 München (DE)
(72) Erfinder: Doppke, Harald, 45481 Mühlheim/Ruhr (DE); Theil, Detlev, 113 38 Stockholm (SE); Harms, Torsten, 47906 Kempen (DE); Van Waasen, Stefan, 192 48 Sollentuna (SE)
(74) Vertreter: Müller, Wolfram Hubertus

(56) Entgegenhaltungen:
- EP-A- 0 580 089
- EP-A- 1 261 152
- US-A- 4 792 997
- US-A- 4 916 307
- US-A1- 2003 219 260
- US-B1- 6 342 694

## Beschreibung

Die Erfindung betrifft eine optische Empfängerschaltung, wie sie insbesondere zur Erfassung optischer Signale in digitalen optischen Empfängern Verwendung findet.

### Hintergrund der Erfindung

Zum Empfang und zur Regeneration von optischen Signalen nach Durchlaufen einer Übertragungsstrecke sind digitale optische Empfänger bekannt, die aus einem analogen Eingangsteil, in dem das optische Signal in ein analoges elektrisches Signal gewandelt wird, und einem digitalen Signalverarbeitungsteil, in dem das analoge Signal in ein digitales Datensignal mit normierter Amplitude und Taktinformation regeneriert wird, bestehen. In dem analogen Teil wird das empfangene optische Signal mittels einer Fotodiode in einen Fotostrom gewandelt und in einem Vorverstärker verstärkt.

Es ist bekannt, in solchen digitalen optischen Empfängern oder auch in anderem Kontext eine Signalerkennung (signal detect) durchzuführen. Eine Signalerkennung erlaubt die Schwellwertdetektion einer bestimmten optischen Leistung am Eingang des Empfängers. Sie wird dazu verwendet, das Vorliegen eines Signals mit einer bestimmten optischen Leistung anzuzeigen. Mit dieser Information können der optische Empfänger und andere Systemkomponenten gesteuert, zum Beispiel aktiviert oder deaktiviert werden. Die Signalerkennung stellt ein logisches "signal detect"-Signal bereit, das den logischen Wert EINS (bei Vorliegen eines Signals einer bestimmten optischen Leistung) oder den logischen Wert Null (sofern ein solches Signal nicht vorliegt) besitzt.

Üblicherweise arbeitet die Signalerkennung durch Betragsbildung bzw. Gleichrichtung und Überwachung des Spitzenwertes des Eingangssignals sowie dessen Vergleich mit einem Referenzwert. Es ist hierzu bekannt, die Signalerkennung mit Hilfe von Mischern, Source- bzw. EmitterFolgern als Gleichrichter auszuführen. Nachteilig ist dies mit einem erheblichen Flächenbedarf und Stromverbrauch verbunden. Eine allgemeine Empfängerschaltung ist aus US 6 342 694 bekannt.

### Aufgabe der Erfindung

Der vorliegenden Erfindung liegt die Aufgabe zugrunde, eine optische Empfängerschaltung mit Signalerkennung bereitzustellen, die mit möglichst wenigen zusätzlichen Komponenten auskommt, vielmehr bereits vorhandene Komponenten zur Signalerkennung nutzt und sich dementsprechend durch einen geringen Flächenbedarf und Stromverbrauch auszeichnet.

### Zusammenfassung der Erfindung

Die vorliegende Erfindung stellt eine optische Empfängerschaltung bereit mit einer ersten, beleuchtbaren Empfangseinrichtung zur Umwandlung eines optischen Signals in ein analoges elektrisches Signal, einem ersten Vorverstärker zur Verstärkung des Ausgangssignals der ersten Empfangseinrichtung und einem Nachverstärker mit einem ersten Eingang und einem zweiten Eingang, wobei dem ersten Eingang das in dem ersten Vorverstärker verstärkte Signal der ersten Empfangseinrichtung und dem zweiten Eingang ein Referenzsignal zugeführt wird. Es ist eine Offset-Kompensationsschaltung vorgesehen, die die Differenz zwischen dem Mittelwert des elektrischen Signals am ersten Eingang des Nachverstärkers und dem Referenzsignal am zweiten Eingang des Nachverstärkers auf einen konstanten Wert, insbesondere auf Null regelt. Weiter besitzt die Empfängerschaltung eine Signalerkennungseinrichtung, die ein Steuersignal der Offset-Kompensationsschaltung erfasst und in Abhängigkeit von diesem Signal eine Signalerkennung vornimmt.

Da bei optischen Systemen das Signal am Eingang des Empfängers in den meisten Fällen einphasig (single-ended) vorliegt, das Design üblicherweise aber aus Gründen der Störanfälligkeit bzw. Stabilität differenziell ausgeführt ist, ist es notwendig, an geeigneter Stelle im linearen Betriebsbereich des optischen Empfängers eine single-ended zu differenziell-Wandlung vorzunehmen. Hierzu muss aus dem Datenstromsignal, das von dem ersten Vorverstärker bereitgestellt wird, der daran enthaltende DC-Offset extrahiert werden. Dies erfolgt mittels einer Offset-Kompensationsschaltung.

Die vorliegende Erfindung nutzt nun eine solche Offset-Kompensationsschaltung zusätzlich für eine Signalerkennung. Es ist dabei möglich, mittels der Offset-Kompensationsschaltung den Pegel des Eingangssignals zu erkennen, da der Offset bis auf den Fehler der endlichen Extinktionsrate den Signalhub des Eingangssignals enthält. Der Fehler der endlichen Extinktionsrate ist in den meisten Systemen aber aufgrund der Mindestanforderung an die Extinktionsrate (>10dB) und der notwendigen Genauigkeit des signal detect (>10dB Schwankungsbreite) vernachlässigbar.

In einer bevorzugten Ausgestaltung weist die Signalerkennungseinrichtung einen Komparator mit einem ersten und einem zweiten Eingang aufweist, wobei an dem ersten Eingang des Komparators ein von dem Steuersignal der Offset-Kompensationsschaltung abhängiges Signal und an dem zweiten Eingang ein Signalerkennungs-Referenzwert anliegt. Der Komparator vergleicht diese Signale und gibt in Abhängigkeit von dem Vergleich das Vorliegen eines Signalerkennung an. Insbesondere wird durch den Komparator ein bestimmter Spannungspegel bereitgestellt, der logisch eine "Eins" oder eine "Null" angibt und ein "signal detect" kodiert.

Die Offset-Kompensationsschaltung weist bevorzugt ein integrierendes Element mit einer Kapazität auf, dessen Spannung zum einen eine Stellgröße der Offset-Kompensationsregelung darstellt und zum anderen von der Signalerkennungseinrichtung erfasst wird. Hierzu weist die Signalerkennungseinrichtung bevorzugt Schaltungsmittel auf, die in Abhängigkeit von der Spannung des integrierenden Elements einen Spannungswert erzeugen, der dem ersten Eingang des Komparators zugeführt wird. Die Spannung des integrierenden Elements wird somit zur Signalerkennung genutzt.

Die genannten Schaltungsmittel können beispielsweise eine Spiegelschaltung aufweisen, wobei die Spannung des integrierenden Elements einem der Tranistoren der Spiegelschaltung als Steuerspannung zugeführt wird. Insbesondere kann die Spiegelschaltung aufweisen:
- einen ersten Transistor, dessen Steuer-Anschluss mit einer konstanten Spannung beaufschlagt ist,
- einen zweiten Transistor, dessen Steuer-Anschluss mit der Spannung des integrierenden Elements beaufschlagt ist,
- einen Stromspiegel aus einem dritten und einem vierten Transistor mit einem Referenzstrom und einem Steuerstrom, wobei
- der erste und dritte Transistor und der zweite und vierte Transistor in Reihe geschaltet sind und
- dem ersten Eingang des Komparators ein Signal zugeführt wird, das zwischen dem zweiten und dem vierten Transistor abgegriffen wird.

Der Referenzstrom des Stromspiegels wird dabei durch den vom ersten Transistor erzeugten Strom gebildet und fließt durch den dritten Transistor. Der Steuerstrom fließt durch den vierten Transistor und versucht zusätzlich, auch durch den zweiten Transistor zu fließen. Inwieweit dies gelingt, hängt von der Steuerspannung des zweiten Transistors ab, die durch die Spannung des integrierenden Elements vorgegeben wird. Bei Anliegen eines Nutzsignals am ersten Vorverstärker steigt die Spannung am integrierenden Element und damit am Steuer-Anschluss des zweiten Transistors. Damit steigt auch das Potential zwischen dem zweiten und dem vierten Transistor an und wird dieses Potential dem Komparator zugeführt. Sofern das zugeführte Potential größer ist als der Referenzwert, liegt ein "signal detect" vor.

In einer bevorzugten Weiterbildung weist die optische Empfängerschaltung des weiteren eine zweite, unbeleuchtbaren Empfangseinrichtung, die das elektrische Verhalten der ersten Empfangseinrichtung im beleuchtungsfreien Fall nachbildet, sowie einen zweiten Vorverstärker zur Verstärkung des Ausgangssignals der zweiten Empfangseinrichtung auf. Dabei ist der Ausgang des zweiten Vorverstärkers mit dem zweiten Eingang des Nachverstärkers verbunden und stellt das Ausgangssignal des zweiten Vorverstärkers den Referenzwert des Nachverstärkers dar.

Eine solche Ausgestaltung ermöglicht eine weitgehende Unterdrückung von Störsignalen, die etwa aus Versorgungsspannungsschwankungen herrühren. Am Ausgang des zweiten Vorverstärkers wird ein Referenzwert bereitgestellt, mit dem im Nachverstärker das vorverstärkte Datenstromsignal verglichen wird.

Die Offset-Kompensationsschaltung regelt in einer bevorzugten Ausgestaltung eine Stromquelle des ersten Vorverstärkers, wobei über diese Regelung der Arbeitspunkt am Eingang des Vorverstärkers und damit auch der mittlere Signalpegel am Ausgang des Vorverstärkers eingestellt wird. Grundsätzlich ist es jedoch ebenfalls möglich, über die Offset-Kompensationsschaltung den Betrag des Referenzwertes, der bevorzugt durch die zweite Empfangseinrichtung und den zweiten Vorverstärker bereitgestellt wird, zu regeln.

Die Regelung erfolgt dabei derart, dass der Referenzwert am Nachverstärker einen Signalwert besitzt, der bei genau 50 % des Signalhubs des Signals am anderen Eingang des Nachverstärkers liegt. Dies kann zum einen dadurch erreicht werden, dass die durch das Referenzsignal definierte Abtastschwelle bei fest vorgegebenem Offset des Datenstromsignals geregelt wird. Ebenso ist es möglich, bei konstantem Referenzsignal den Offset des Datenstromsignals zu regeln. Auch eine Kombination solcher Regelungen ist möglich. Entscheidend ist, dass das Signal beim 50 %-Wert der Amplitude abgetastet wird. Für diesen Fall stellt der Nachverstärker an seinem Ausgang ein offset-korrigiertes, dem optischen Signal der ersten Empfangseinrichtung entsprechendes Ausgangsignal und ein dazu invertiertes Ausgangssignal bereit. Es findet dann eine differenzielle Ansteuerung der darauffolgenden Komponenten statt.

Die erste Empfangseinrichtung und die zweite Empfangseinrichtung sind bevorzugt auf einem Chip monolithisch integriert. Der erste Vorverstärker und der zweite Vorverstärker sind dabei identisch ausgebildet.

### Beschreibung eines bevorzugten Ausführungsbeispiels

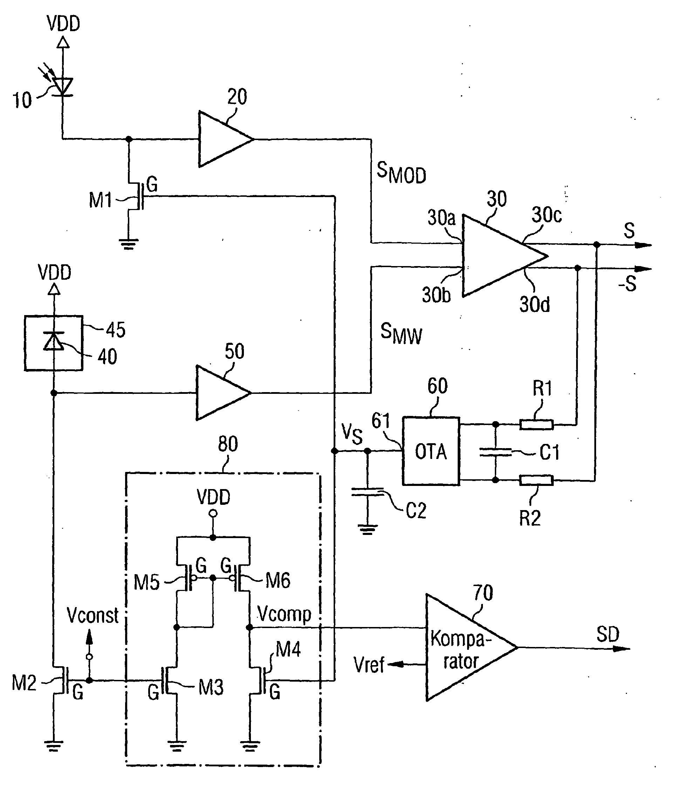

Die Erfindung wird nachfolgend unter Bezugnahme auf die einzige Figur an einem Ausführungsbeispiel näher erläutert. Die Figur zeigt eine optische Empfängerschaltung eines digitalen optischen Empfängers.

Die Empfängerschaltung besitzt einen ersten optoelektronischen Wandler 10 in Form einer Fotodiode, der ein optisches Informationssignal in ein elektrisches Signal umwandelt. Das elektrische Signal wird in einem Eingangsverstärker bzw. Vorverstärker 20 verstärkt und dem einen Eingang 30a eines Nachverstärkers 30 (post amplifier) zugeführt, der ein Differenzverstärker ist. Bei dem Vorverstärker 20 handelt es sich bevorzugt um einen Transimpedanzverstärker, der aus einem Spannungsverstärker und einem Gegenkopplungswiderstand besteht (nicht näher dargestellt).

Dem im Wesentlichen rechteckförmigen Ausgangssignal der Fotodiode 10 wird am Eingang des Vorverstärkers 20 ein konstanter Strom einer regelbaren Stromquelle überlagert, die durch einen Feldeffekt-Transistor M1 bereitgestellt wird. Die Regelung der Stromquelle M1 erfolgt über die an dem Transistor M1 anliegende Gatespannung. Statt eines Feldeffekt-Transistors kann jedoch an dieser Stelle und auch sonst in der Schaltung grundsätzlich auch ein Bipolartransistor eingesetzt werden.

Die Stromquelle M1 speist einen Strom in den Vorverstärker 20 ein und stellt dadurch einen geeigneten Offset am Eingang des Vorverstärkers 20 bereit.

Über weitere Schaltungselemente (nicht dargestellt) kann darüber hinaus vorgesehen sein, den Gegenkopplungswiderstand des Vorverstärkers 20 zu variieren und hierdurch die Amplitude des Ausgangssignals des Vorverstärkers 20 einzustellen.

Es ist des Weiteren eine Fotodiode 40 vorgesehen, die jedoch durch eine Blende 45 oder dergleichen abgedeckt ist. Es handelt sich um eine "Dummy-Fotodiode", die das elektrische Verhalten der "sehenden" Fotodiode 10 im beleuchtungsfreien Fall elektrisch nachbildet. Auf diese Weise können hochfrequente Störungen weitestgehend unterdrückt werden.

Der Fotostrom der unbeleuchtbaren Fotodiode 40 wird einem weiteren Eingangsverstärker bzw. Vorverstärker 50 zugeführt. Über eine weitere Stromquelle M2 wird der Eingangspegel am Eingang des zweiten Vorverstärkers 50 eingestellt. Die zweite Stromquelle M2 wird ebenfalls durch einen Feldeffekt-Transistor M2 bereitgestellt. Die Gatespannung des Transistors M2 ist mit einer festen Spannung V_{CONST} beaufschlagt, so dass die Stromquelle M2 einen festen Strom bereitstellt.

Das Ausgangssignal des ersten Vorverstärkers 20 wird dem einen Eingang 30a des Nachverstärkers 30 zugeführt. Das Ausgangssignal des zweiten Vorverstärkers 50 wird dem anderen Eingang 30b des Nachverstärkers zugeführt. Da kein optisches Signal durch die unbeleuchtbare Fotodiode 40 detektiert wird, weist das an dem Eingang 30b anliegende Signal S_{MW} abgesehen von Störfrequenzen einen konstanten Wert auf. Das Signal S_{MOD} am Ausgang des ersten Vorverstärkers 20 stellt dagegen ein rechteckförmig moduliertes Informationssignal dar.

Es ist nun anzustreben, zur Offset-Korrektur des von der Fotodiode 10 abgegebenen und im Vorverstärker 20 verstärkten modulierten Signals S_{MOD} ein "Korrektursignal" S_{MW} in den unteren Eingang 30b des Nachverstärkers 30 einzuspeisen, dessen Größe genau bei 50 % des Signalhubs des Informationssignals S_{MOD} am anderen Eingang 30a des Nachverstärkers darstellt. Der Nachverstärker 30 stellt für diesen Fall an seinem Ausgang ein offset-korrigiertes, dem optischen Signal der Fotodiode 10 entsprechendes Ausgangssignal bereit. Dabei ist vorgesehen, dass der Nachverstärker 30 an zwei Ausgängen 30c, 30d ein Ausgangssignal S und dazu invertiertes Ausgangssignal -S bereitstellt. Es findet dann eine differenzielle Ansteuerung der darauffolgenden Komponenten statt.

Um zu erreichen, dass der Pegel S_{MW} am Ausgang des Vorverstärkers 50 gerade gleich dem Mittelwert des Signalhubs des Datenstromsignals S_{MOD} ist, erfolgt eine Regelung mittels einer Offset-Kompensationsschaltung. Hierzu wird das differenzielle Ausgangssignal S, -S über einen Filter bestehend aus zwei Widerständen R1, R2 und einem ersten Kondensator C1 einem Operationsverstärker 60 mit einem Stromausgang zugeführt. Der Ausgang 61 des Operationsverstärkers 60 bildet zusammen mit einem zweiten Kondensator C2 ein integrierendes Element. Dabei wird die Kapazität C2 über den Operationsverstärker mit einem Strom beaufschlagt, der im Takt des von der Fotodiode 10 erfassten Informationssignals zu einem Laden und Entladen des Kondensators C2 führt.

Aufgrund der integrierenden Wirkung folgt die an der Kapazität C2 anliegende Spannung jedoch nur langsam dem Takt des Informationssignals. Die Spannung steigt vielmehr langsam bzw. fällt langsam in Abhängigkeit davon, ob ein Informationssignal vorliegt oder nicht. Sofern die Signale S, -S, die dem Eingang des Operationsverstärkers 60 zugeführt werden, zueinander genau invers sind, findet keine Entladung bzw. Aufladung der Kapazität C2 statt und es liegt ein stabiler Zustand vor. In diesem Fall ist das System eingeschwungen. Sofern die Signale S, -S nicht exakt zueinander invers sind, erfolgt ein langsames Ent- oder Aufladen der Kapazität C2.

Die an der Kapazität C2 anliegende Spannung stellt eine Steuerspannung Vₛ für die erste Stromquelle M1 bereit. Auf diese Weise wird das System ausgeregelt, bis der durch die Stromquelle M1 bereitgestellte Strom gerade einen mittleren Pegel aufweist, der gleich dem am zweiten Eingang 30b des Nachverstärkers 30 anliegenden Referenzwert ist.

Das System ist somit dann ausgeregelt, wenn die Differenz zwischen dem Mittelwert des elektrischen Signals S_{MOD} am ersten Eingang 30a des Nachverstärkers 30 und dem Referenzsignal S_{MW} am zweiten Eingang 70b des Nachverstärkers 30 auf einen konstanten Wert regelt ist, wobei dieser Wert bevorzugt gleich Null ist. Es liegt dann der ideale Vergleichwert für das vorverstärkte Datenstromsignal vor.

Dabei wird darauf hingewiesen, dass grundsätzlich statt der Stromquelle M1 auch die Stromquelle M2 geregelt werden könnte. Grundsätzliche Unterschiede würden sich hierbei nicht ergeben.

Insgesamt wird somit der Mittelwert des Datensignals mit einer Versatzkompensation bzw. Offset-Kompensation abgesenkt. Diese Offset-Kompensation wird nun gleichzeitig dazu genutzt, um eine Signalerkennung durchzuführen.

Die durch die Kapazität C2 bereitgestellte Steuerspannung wird entsprechend dem Gedanken der vorliegenden Erfindung nicht nur zur Offset-Kompensation verwendet, sondern dient zusätzlich als Eingangssignal für eine Schaltung 80 bestehend aus Feldeffekt-Transistoren M3, M4, M5, M6, die einen Spannungs-Vergleichswert V_{COMP} für einen Komparator 70 erzeugt.

Der Komparator 70 vergleicht den Spannungs-Vergleichswert V_{COMP} mit einem festen Referenzsignal V_{REF}. Wenn das Signal V_{COMP} größer ist als Referenzsignal V_{REF}, liegt eine Signalerkennung vor und am Ausgang des Komparators 70 wird ein logisches Signal SD (Signal Detect) mit dem logischen Wert "Eins" ausgegeben. Ist dagegen die Vergleichsspannung V_{COMP} kleiner als die Referenzspannung V_{REF}, so liegt kein ausreichend großes Signal vor und das logische Signal SD liegt bei logisch "Null".

Die Schaltung 80 ist im dargestellten Ausführungsbeispiel als Stromspiegelschaltung ausgebildet. Sie weist einen ersten n-Kanal FET Transistor (Feldeffekttransistor) M3 auf. Der Gate-Anschluss des ersten Transistors M3 ist mit der festen Spannung V_{CONST} beaufschlagt, die auch am Gate-Anschluss des Transistors M2 anliegt. Der Source-Anschluss ist mit Masse verbunden. Der eigentliche Stromspiegel wird aus zwei p-Kanal Transistoren M5, M6 gebildet, wobei der Gate-Anschluss und der Drain-Anschluss des einen Transistors M5 mit dem Drain-Anschluss des Transistors M3 verbunden sind. Der Source-Anschluss des Transistors M5 ist - gegebenenfalls über einen Widerstand - mit einer positiven Versorgungsspannung V_{DD} verbunden. Die Gate-Anschlüsse der Transistoren M5, M6 sind miteinander verbunden. Der Source-Anschluss des weiteren Transistors M6 ist - gegebenenfalls über einen weiteren Widerstand - ebenfalls mit der positiven Versorgungsspannung V_{DD} verbunden.

Es ist des Weiteren ein n-Kanal FET-Transistor M4 vorgesehen, der mit dem Transistor M6 in Reihe geschaltet ist. Der Source-Anschluss des Transistors M4 ist mit Masse und der Drain-Anschluss mit dem Drain-Anschluss des Transistors M6 verbunden. Der Gate-Anschluss des Transistors M4 wird mit der Spannung Vₛ an der Kapazität C2 des integrierenden Elements der Offset-Kompensationsschaltung beaufschlagt.

Die Funktionsweise des Stromspiegels ist wie folgt.
Der durch den Transistor M3 erzeugte Strom stellt einen Referenzstrom des Stromspiegels 80 dar, der durch den Transistor M5 fließt. Der Stromspiegel erzeugt nun einen Steuerstrom, der in einem bestimmten Verhältnis zum Referenzstrom steht, und der durch den Transistor M6 fließt und versucht, zusätzlich auch durch den Transistor M4 zu fließen. Inwieweit dies gelingt, hängt von der Gate-Spannung des Transistors M4 ab, die durch die Spannung des integrierenden Elements C2 bestimmt wird.

Eine Spannung V_{COMP} wird zwischen den Transistoren M4 und M6 abgegriffen und dem einen Eingang des Komparators 70 zugeführt. In Abhängigkeit davon, wie groß die Spannung Vₛ am Gate der Kapazität C2 ist, variiert die Spannung V_{COMP}. Sofern an der Kapazität C2 eine geringe Spannung anliegt, ist auch der abgegriffene Spannungswert V_{COMP} gering. Wenn die Spannung an der Kapazität C2 ansteigt, steigt auch der Spannungswert V_{COMP}. So kann der Strom durch den Transistor M6 für diesen Fall nur noch in verringertem Maße durch den Transistor M4 abfließen. Die Spannung an der Kapazität C2 steigt jedoch gerade dann an, wenn ein Signal durch die beleuchtete Fotodiode 10 detektiert wird und am Vorverstärker 1 anliegt. Die mit der Spannung an der Kapazität C2 steigende Spannung V_{COMP} kann somit zur Signalerkennung benutzt werden.

Bei Anliegen eines Nutzsignals am ersten Vorverstärker 20 steigt also die Spannung am integrierenden Element C2 und damit am Gate-Anschluss des Transistors M4. Damit steigt auch das Potential zwischen den Transistoren M4, M6 an und wird dieses Potential dem Komparator 70 zugeführt.
Die verwendeten Bauelemente sind bevorzugt in CMOS-Technologie ausgeführt.

Die Erfindung beschränkt sich in ihrer Ausgestaltung nicht auf die vorstehend dargestellten Ausführungsbeispiele. Beispielsweise kann, wie bereits erläutert, statt der Stromquelle M1 ebenso die Stromquelle M2 durch die Offset-Kompensationsschaltung geregelt werden. Die Spiegelschaltung könnte dann beispielsweise mit dem Transistor M1 gekoppelt sein, der für diesen Fall mit einer festen Gatespannung beaufschlagt wäre. In anderen Ausgestaltungen kann vorgesehen sein, dass dem Komparator 60 unmittelbar die Offset-Spannung, die durch die Kapazität C2 bereitgestellt wird, zugeführt wird. Der Komparator 60 vergleicht diese Offset-Spannung dann mit einer Referenzspannung.

## Patentansprüche

1. Optische Empfängerschaltung mit:
- einer ersten, beleuchtbaren Empfangseinrichtung (10) zur Umwandlung eines optischen Signals in ein analoges elektrisches Signal;
- einem ersten Vorverstärker (20) zur Verstärkung des Ausgangssignals der ersten Empfangseinrichtung;
- einen Nachverstärker (30) mit einem ersten Eingang (30a) und einem zweiten Eingang (30b), wobei dem ersten Eingang (30a) das in dem ersten Vorverstärker (20) verstärkte Signal der ersten Empfangseinrichtung (10) und dem zweiten Eingang (30b) ein Referenzsignal zugeführt wird, und
- einer Offset-Kompensationsschaltung (R1, R2, C1, 60, C2), die die Differenz zwischen dem Mittelwert des elektrischen Signals am ersten Eingang des Nachverstärkers (30) und dem Referenzsignal am zweiten Eingang des Nachverstärkers auf einen konstanten Wert regelt,
**gekennzeichnet durch**
eine Signalerkennungseinrichtung (70, 80), die ein Steuersignal der Offset-Kompensationsschaltung (R1, R2, C1, 60, C2) erfasst und in Abhängigkeit von diesem Signal eine Signalerkennung vornimmt.

2. Optische Empfängerschaltung nach Anspruch 1, wobei
- die Signalerkennungseinrichtung einen Komparator (70) mit einem ersten und einem zweiten Eingang aufweist,
- an dem ersten Eingang des Komparators ein von dem Steuersignal der Offset-Kompensationsschaltung (R1, R2, C1, 60, C2) abhängiges Signal anliegt,
- an dem.zweiten Eingang ein Signalerkennungs-Referenzwert anliegt, und
- der Komparator (70) diese Signale vergleicht und in Abhängigkeit von dem Vergleich das Vorliegen eines Signalerkennung angibt.

3. Optische Empfängerschaltung nach Anspruch 1 oder 2, wobei die Offset-Kompensationsschaltung ein integrierendes Element mit einer Kapazität (C2) aufweist, dessen Spannung zum einen eine Stellgröße der Offset-Kompensationsschaltung darstellt und zum anderen von der Signalerkennungseinrichtung (80) erfasst wird.

4. Optische Empfängerschaltung nach Anspruch 2 und 3, wobei die Signalerkennungseinrichtung (80) Schaltungsmittel (M3, M4, M5, M6) aufweist, die in Abhängigkeit von der Spannung des integrierenden Elements (C2) einen Spannungswert erzeugen, der dem ersten Eingang des Komparators (70) zugeführt wird.

5. Optische Empfängerschaltung nach Anspruch 4, wobei die Schaltungsmittel eine Spiegelschaltung (M3, M4, M5, M6) aufweisen und die Spannung des integrierenden Elements (C2) die Steuerspannung eines der Transistoren (M4) der Spiegelschaltung darstellt.

6. Optische Empfängerschaltung nach Anspruch 5, wobei die Spiegelschaltung aufweist:
- einen ersten Transistor (M3), dessen Steuer-Anschluss mit einer konstanten Spannung beaufschlagt ist,
- einen zweiten Transistor (M4), dessen Steuer-Anschluss mit der Spannung des integrierenden Elements (C2) beaufschlagt ist,
- einen Stromspiegel aus einem dritten und einem vierten Transistor (M5, M6) mit einem Referenzstrom und einem Steuerstrom, wobei
- der Referenzstrom des Stromspiegels durch den vom ersten Transistor (M3) erzeugten Strom gebildet wird,
- der erste und dritte Transistor (M3, M5) und der zweite und vierte Transistor (M4, M6) in Reihe geschaltet sind und
- dem ersten Eingang des Komparators (70) ein Signal zugeführt wird, das zwischen dem zweiten und dem vierten Transistor (M4, M6) abgegriffen wird.

7. Optische Empfängerschaltung nach Anspruch 3, wobei die Spannung des integrierenden Elements (C2) eine regelbare Stromquelle (M1) des ersten Vorverstärkers (20) regelt.

8. Optische Empfängerschaltung nach Anspruch 1, wobei des weiteren vorgesehen sind:
- eine zweite, unbeleuchtbaren Empfangseinrichtung (40), die das elektrische Verhalten der ersten Empfangseinrichtung (10) im beleuchtungsfreien Fall nachbildet und
- ein zweiter Vorverstärker (50) zur Verstärkung des Ausgangssignals der zweiten Empfangseinrichtung (40),
- wobei der Ausgang des zweiten Vorverstärkers (50) mit dem zweiten Eingang (30b) des Nachverstärkers (30) verbunden ist.

9. Optische Empfängerschaltung nach Anspruch 8, wobei die erste Empfangseinrichtung (10) und die zweite Empfangseinrichtung (40) auf einem Chip monolithisch integriert sind.

10. Optische Empfängerschaltung nach Anspruch 8, wobei der erste Vorverstärker (20) und der zweite Vorverstärker (50) identisch sind.

## Claims

1. Optical receiver circuit having:
- a first, illuminable reception device (10) for converting an optical signal into an analog electrical signal;
- a first preamplifier (20) for amplifying the output signal of the first reception device;
- a postamplifier (30) having a first input (30a) and a second input (30b), the first input (30a) being supplied with the signal of the first reception device (10) the signal having been amplified in the first preamplifier (20), and the second input (30b) being supplied with a reference signal,
- an offset compensation circuit (R1, R2, C1, 60, C2), which regulates the difference between the mean value of the electrical signal at the first input of the postamplifier (30) and the reference signal at the second input of the postamplifier to a constant value,
**characterized by**
- a signal detection device (70, 80), which detects a control signal of the offset compensation circuit (R1, R2, C1, 60, C2) and carries out signal detection in a manner dependent on this signal.

2. Optical receiver circuit according to Claim 1,
- the signal detection device having a comparator (70) having a first and a second input,
- a signal, which is dependent on the control signal of the offset compensation circuit (R1, R2, C1, 60, C2), being present at the first input of the comparator,
- a signal detection reference value being present at the second input, and
- the comparator (70) comparing these signals and, in a manner dependent on the comparison, indicating the presence of signal detection.

3. Optical receiver circuit according to Claim 1 or 2, the offset compensation circuit having an integrating element having a capacitance (C2), the voltage of said element, on the one hand, representing a manipulated variable of the offset compensation circuit and, on the other hand, being detected by the signal detection device (80).

4. Optical receiver circuit according to Claim 2 and 3, the signal detection device (80) having circuit means (M3, M4, M5, M6) which, in a manner dependent on the voltage of the integrating element (C2), generate a voltage value, which is supplied to the first input of the comparator (70).

5. Optical receiver circuit according to Claim 4, the circuit means having a mirror circuit (M3, M4, M5, M6) and the voltage of the integrating element (C2) representing the control voltage of one of the transistors (M4) of the mirror circuit.

6. Optical receiver circuit according to Claim 5, the mirror circuit having:
- a first transistor (M3), the control terminal of which has a constant voltage applied to it,
- a second transistor (M4), the control terminal of which has the voltage of the integrating element (C2) applied to it,
- a current mirror comprising a third and a fourth transistor (M5, M6) with a reference current and a control current,
- the reference current of the current mirror being formed by the current generated by the first transistor (M3),
- the first and third transistor (M3, M5) and the second and fourth transistor (M4, M6) being connected in series, and
- a signal, which is tapped off between the second and the fourth transistor (M4, M6), being supplied to the first input of the comparator (70).

7. Optical receiver circuit according to Claim 3, the voltage of the integrating element (C2) regulating a regulatable current source (M1) of the first preamplifier (20).

8. Optical receiver circuit according to Claim 1, provision furthermore being made of:
- a second, nonilluminable reception device (40), which simulates the electrical behaviour of the first reception device (10) in the illumination-free case, and
- a second preamplifier (50) for amplifying the output signal of the second reception device (40),
- the output of the second preamplifier (50) being connected to the second input (30b) of the postamplifier (30).

9. Optical receiver circuit according to Claim 8, the first reception device (10) and the second reception device (40) being monolithically integrated on a chip.

10. Optical receiver circuit according to Claim 8, the first preamplifier (20) and the second preamplifier (50) being identical.

## Revendications

1. Circuit de réception optique comprenant :
- un premier dispositif de réception (10) éclairable destiné à convertir un signal optique en un signal électrique analogique ;
- un premier préamplificateur (20) destiné à amplifier le signal de sortie du premier dispositif de réception ;
- un amplificateur de récupération (30) comprenant une première entrée (30a) et une deuxième entrée (30b), le signal du premier dispositif de réception (10) amplifié dans le premier préamplificateur (20) étant acheminé à la première entrée (30a) et un signal de référence à la deuxième entrée (30b) et
- un circuit de compensation d'offset (R1, R2, C1, 60, C2) qui régule la différence entre la valeur moyenne du signal électrique à la première entrée de l'amplificateur de récupération (30) et le signal de référence à la deuxième entrée de l'amplificateur de récupération à une valeur constante,
**caractérisé par**
un dispositif de reconnaissance de signal (70, 80) qui détecte un signal de commande du circuit de compensation d'offset (R1, R2, C1, 60, C2) et effectue une reconnaissance du signal en fonction de ce signal.

2. Circuit de réception optique selon la revendication 1,
- le dispositif de reconnaissance de signal présentant un comparateur (70) muni d'une première et d'une deuxième entrées,
- un signal dépendant du signal de commande du circuit de compensation d'offset (R1, R2, C1, 60, C2) étant appliqué à la première entrée du comparateur,
- une valeur de référence de reconnaissance de signal étant appliquée à la deuxième entrée et
- le comparateur (70) comparant ces signaux et indiquant la présence d'une reconnaissance de signal en fonction de la comparaison.

3. Circuit de réception optique selon la revendication 1 ou 2, le circuit de compensation d'offset présentant un élément intégratif avec une capacité (C2) dont la tension représente d'une part une grandeur de commande du circuit de compensation d'offset et d'autre part est détectée par le dispositif de reconnaissance de signal (80).

4. Circuit de réception optique selon la revendication 2 et 3, le dispositif de reconnaissance de signal (80) présentant des moyens de commutation (M3, M4, M5, M6) qui génèrent une valeur de tension en fonction de la tension de l'élément intégratif (C2), laquelle est acheminée à la première entrée du comparateur (70).

5. Circuit de réception optique selon la revendication 4, les moyens de commutation présentant un circuit en miroir (M3, M4, M5, M6) et la tension de l'élément intégratif (C2) représentant la tension de commande de l'un des transistors (M4) du circuit en miroir.

6. Circuit de réception optique selon la revendication 5, le circuit en miroir présentant :
- un premier transistor (M3) dont la borne de commande est soumise à une tension constante,
- un deuxième transistor (M4) dont la borne de commande est soumise à la tension de l'élément intégratif (C2),
- un miroir de courant composé d'un troisième et d'un quatrième transistors (M5, M6) avec un courant de référence et un courant de commande,
- le courant de référence du miroir de courant étant formé par le courant généré par le premier transistor (M3),
- les premier et troisième transistors (M3, M5) ainsi que les deuxième et quatrième transistors (M4, M6) étant branchés en série et
- un signal étant acheminé à la première entrée du comparateur (70), lequel est prélevé entre les deuxième et quatrième transistors (M4, M6).

7. Circuit de réception optique selon la revendication 3, la tension de l'élément intégratif (C2) régulant une source de courant réglable (M1) du premier préamplificateur (20).

8. Circuit de réception optique selon la revendication 1, les éléments suivants étant en plus prévus:
- un deuxième dispositif de réception (40) non éclairable qui simule le comportement électrique du premier dispositif de réception (10) en l'absence d'éclairage et
- un deuxième préamplificateur (50) destiné à amplifier le signal de sortie du deuxième dispositif de réception (40),
- la sortie du deuxième préamplificateur (50) étant reliée avec la deuxième entrée (30b) de l'amplificateur de récupération (30).

9. Circuit de réception optique selon la revendication 8, le premier dispositif de réception (10) et le deuxième dispositif de réception (40) étant intégrés sur une puce monolithique.

10. Circuit de réception optique selon la revendication 8, le premier préamplificateur (20) et le deuxième préamplificateur (50) étant identiques.
